# EUROPÄISCHE PATENTSCHRIFT

(11) **EP 1 192 060 B1**
(45) Veröffentlichungstag und Bekanntmachung des Hinweises auf die Patenterteilung: **17.12.2008**
(21) Anmeldenummer: 00942015.9
(22) Anmeldetag: 06.06.2000
(51) Int. Cl.: B60N 2/015, B60N 2/22, B60N 2/68

(54) **BEFESTIGUNGSVORRICHTUNG FÜR DEN AM SITZTEIL ODER SITZRAHMEN FESTGELEGTEN BESCHLAGTEIL EINES BESCHLAGES**
FASTENING DEVICE FOR THE FITTING PART OF A FITTING FIXED TO THE SEAT PART OR SEAT FRAME
DISPOSITIF DE FIXATION POUR LA PARTIE D'UNE FERRURE FIXEE SUR LA PARTIE DE SIEGE OU SUR LA PARTIE DE CADRE

(30) Priorität: 05.07.1999 DE 19930945
(43) Veröffentlichungstag der Anmeldung: 03.04.2002
(73) Patentinhaber: KEIPER GmbH & Co. KG, 67657 Kaiserslautern (DE)
(72) Erfinder: SCHUHMACHER, Gerd, D-42369 Wuppertal (DE); VOSS, Heinz, Dr., D-51375 Leverkusen (DE); MAI, Helmut, D-40217 Düsseldorf (DE)
(74) Vertreter: Ludewig, Karlheinrich
(86) Internationale Anmeldenummer: PCT/EP2000/005139
(87) Internationale Veröffentlichungsnummer: WO 2001/002212

(56) Entgegenhaltungen:
- WO-A-99/10196
- DE-A- 2 849 542
- DE-A- 4 326 623
- DE-A- 19 610 826
- DE-C- 19 817 634
- DE-U- 9 420 823
- US-A- 5 104 190

## Beschreibung

Die Erfindung betrifft eine Befestigungsvorrichtung für den am Sitzteil oder Sitzrahmen eines Fahrzeugsitzes, insbesondere Kraftfahrzeugsitzes festgelegten Beschlagteil eines zwischen Sitzteil und Rückenlehne angeordneten Beschlages, wobei die Befestigungsvorrichtung zumindest zwei Öffnungen des Beschlagteiles durchdringende und im Abstand zueinander mit dem Sitzteil oder Sitzrahmen verbundene Befestigungsmittel umfaßt.

Aus der DE 28 49 542 A1 ist ein als Gelenkbeschlag fungierender Beschlag zwischen Sitzteil und Rückenlehne ersichtlich, der den Sitzteil mit der ver- und feststellbaren Rückenlehne verbindet. Dabei sind zwei Beschlagteile über ein einfaches Planetengetriebe miteinander derart verbunden, daß der mit der Rückenlehne verbundene Beschlagteil gegenüber dem mit dem Sitzteil oder dem Sitzrahmen verbundenen Beschlagteil zur Ver- und Feststellung der Rückenlehnenneigung schwenkbar ist. Der dem Sitzteil oder Sitzrahmen zugehörige Beschlagteil weist dabei jeweils an den beiden außen liegenden Enden angeordnete Löcher zur Durchführung von Befestigungsmitteln auf, wodurch der Beschlagteil mit dem Sitzteil oder dessen Sitzrahmen fest verbunden ist. Eine solche Befestigung des Beschlagteiles am Fahrzeugsitz wird insbesondere dann gewählt, wenn die Verwendung des Beschlages bei 4-türigen Personenkraftwagen erfolgt, weil der Fond des Kraftfahrzeuges durch jeweils zwei hintere Türen zu besteigen ist, so daß ein Nach-Vorn-Klappen der Rückenlehne nicht benötigt wird.

Wenn jedoch zum bequemeren Einsteigen in den Fondbereich eines 2-türigen Personenkraftwagens ein Vorklappen der Rückenlehne erwünscht ist, so läßt sich - wie beispielsweise aus der DE 43 26 623 A1 ersichtlich ist - der dem Sitzteil bzw. dem Sitzrahmen zugeordnete Beschlagteil in seinem vorderen Bereich auf einem am Sitzteil bzw. Sitzrahmen angeordneten Zapfen lagern, während sich der hintere Bereich des Beschlagteiles auf einem sitzteilfesten Anschlag abstützt, der von einem am Beschlagteil gelagerten Fanghaken umgriffen ist.

Im vorliegenden Fall geht es jedoch darum, den dem Sitzteil oder Sitzrahmen zugehörigen Beschlagteil an diesen Bauteilen festzulegen. Dazu ist es - wie oben bereits erwähnt wurde - bekannt, zwei Löcher im Beschlagteil zur Durchführung von Befestigungsmitteln anzuordnen, wobei es sich bei den Befestigungsmitteln in der Regel um Schrauben handelt. Dies bedingt jedoch eine spezielle Ausführungsform des Sitzteiles bzw. Sitzrahmens, in den dort Durchbrüche bzw. Löcher einzubringen sind, die der Aufnahme von beispielsweise aus Schrauben bestehenden Befestigungsmitteln dienen, wozu auch separate und somit auch aufwendige Montagevorgänge erforderlich sind.

Aus der gattungsgemäßen DE 198 17 634 C1 ist eine Montagevorrichtung, insbesondere zum Verbinden einer Sitzstruktur mit einem Kraftfahrzeugchassis bekannt, welche beim Anbringen zuerst mittels einer Schlüssellochöffnung und einem hinterschnittenen Kopfbolzen einfach und schnell an einem Befestigungsteil gehaltert wird, wobei anschließend zwei Bohrungen in der Montagevorrichtung dazu dienen, die Montagevorrichtung durch zwei weitere Befestigungsmittel unbewegbar am Befestigungsteil zu sichern. Nachteilig an dieser Montagevorrichtung ist, daß zwei Befestigungsmittel zusätzlich als Halterung zum Kopfbolzen für die Befestigung am Befestigungsteil verwendet werden, wodurch das Anbringen erschwert wird und unnötige Zeit beansprucht. Außerdem ist ein spielfreies Anbringen der Montagevorrichtung nicht möglich, so daß die Montagevorrichtung beim weiteren Einbau eines Kraftfahrzeugsitzes auf dem Befestigungsteil justiert werden muß. Durch diesen zusätzlichen Arbeitsschritt wird das Anbringen der Montagevorrichtung weiter erschwert. Somit kommen die Vorteile, die sich aus der Kombination Schlüssellochöffnung und hinterschnittenem Kopfbolzen beim Anbringen der Montagevorrichtung ergeben, nicht zur Geltung. Auch kann die Montagevorrichtung nicht direkt für vorklappbare Sitzlehnen verwendet werden, woraus eine deutlich eingeschränkte Verwendung für die Montagevorrichtung folgt.

Aufgabe der Erfindung ist es, eine Befestigungseinrichtung zu schaffen, die eine gleiche Ausbildung von Sitzteil oder Sitzrahmen hinsichtlich der Befestigung des zugehörigen Beschlagteiles ermöglicht, ohne Rücksicht darauf, ob die Rückenlehne starr, verschwenk- und feststellbar oder außerdem auch noch vorklappbar am Sitzteil oder Sitzrahmen festgelegt werden soll. Diese Aufgabe ist mit den im Kennzeichen des Patentanspruches 1 genannten Merkmalen gelöst. Mit der Überschuböffnung läßt sich der Beschlagteil auf dem am Sitzteil oder Sitzrahmen festgelegten Zapfen derart fest plazieren, daß die vordere Öffnung des Beschlagteiles in eine solche Lage gelangt, daß der als Befestigungsmittel dienende, einen Spannansatz aufweisende Haltebolzen in eine vorbereitete Gewindebohrung im Sitzteil bzw. Sitzrahmen eingebracht werden kann, wobei über den Spannansatz der Beschlagteil festgelegt ist, indem auch der Zapfen in seiner Arretierungslage in der Überschuböffnung fixiert ist. Gemäß dem Kennzeichen des Patentanspruches 1 ist der Haltebolzen als Kopfschraube mit einem in eine Gewindebohrung des Sitzteiles oder Sitzrahmens eindrehbaren Gewindeschaft und einem Bolzenabschnitt mit kreisförmigem Querschnitt ausgebildet, wobei der Bolzenabschnitt wenigstens bereichsweise als Kegelstumpf gestaltet ist.

Um eine spielfreie Befestigung des Beschlagteiles auch am Zapfen zu ermöglichen, ist der Zapfen als Kemmzapfen ausgebildet und weist die Überschuböffnung im Beschlagteil einen trichterartigen Bereich auf, an dessen gegenüberliegenden Wangen der Klemmzapfen im Fixierfalle zur Anlage kommt. Infolge des trichterartigen Bereiches der Überschuböffnung ist das Aufstecken und Überschieben des Beschlagteiles auf den beispielsweise als Stehbolzen ausgebildeten und am Sitzteil oder Sitzrahmen festgelegten Klemmzapfen einerseits leicht möglich und andererseits läßt sich die Neigung der Wangen derart ausbilden, daß in der Befestigungslage des Beschlagteiles eine Klemmlage zwischen Überschuböffnung und Klemmzapfen erzielt wird. Es ist möglich, die Bauteile dieser Befestigungsvorrichtung sämtlich aus Stahl zu fertigen, wobei es jedoch erforderlich ist, die Fertigungstoleranzen dieser Bauteile zu minimieren, damit eine klapperfreie Befestigungslage sichergestellt werden kann. Bekanntlich vereinfachen größere Toleranzbereiche die Fertigung, was sich auch im vorliegenden Fall günstig auswirkt, wenn ein in die Überschuböffnung im Beschlagteil eingreifender Zylinderabschnitt des Klemmzapfens von einer hartelastischen Buchse umgriffen wird. Diese hartelastische Buchse kann gegenüber dem Wangenabstand an der Klemmstelle der Überschuböffnung einen geringfügig größeren Durchmesser aufweisen, so daß es in der Fixierlage des Beschlagteiles zu einer leichten Verformung der hartelastischen Buchse an deren Oberfläche kommen kann, wodurch eine feste Halterung der Überschuböffnung am Klemmzapfen gesichert ist.

Eine klemmende Verformung der hartelastischen Buchse läßt sich auch erzielen, indem die Buchse an ihrem Innenumfang mehrere Verformungsvorsprünge aufweist. Stattdessen ist es jedoch auch möglich, die Buchse derart zu gestalten, daß sie im jeweiligen Endbereich ihres Außenumfanges nach außen und zu den Stirnseiten der Buchse ansteigende Kegelringe aufweist. Dadurch wird einerseits eine klemmende Verformung der Buchse erzielt und andererseits eine Zentrierung des Beschlagteiles hinsichtlich seiner axialen Lage erreicht.

Zur Erzielung einer Steigerung der Klemmlage des Klemmzapfens ist es auch möglich, die Überschuböffnung des Beschlagteiles in Richtung auf die die Schraube aufnehmende Öffnung im Beschlagteil zu verjüngen, wenn die Überschuböffnung von der Schraube wegweisend aus dem Beschlagteil austritt.

Auf eine trichterförmige Ausbildung und damit Verjüngung der Überschuböffnung kann dann verzichtet werden, wenn wie nach einem weiteren Ausgestaltungsmerkmal der Erfindung vorgeschlagen, der Klemmzapfen einen elliptischen Querschnitt aufweist, dessen größte Achse bei in Befestigungslage befindlichem Beschlagteil quer zur Längsrichtung der Überschuböffnung verläuft. In diesem Fall läßt sich die Überschuböffnung derart gestalten, daß der hochkant aufgesteckte Beschlagteil zur Überführung in seine Befestigungslage so weit verschwenkt wird, daß die der Überschuböffnung gegenüberliegende Bohrung im Beschlagteil in den Bereich des Zentrums der die Schraube aufnehmenden Gewindebohrung gelangt, so daß diese Schraube eingeschraubt werden kann, während gleichzeitig eine Verklemmung des Klemmzapfens mit seinem die größte Achse aufweisenden elliptischen Umfang in der Überschuböffnung erfolgt. Auch in diesem Fall mag es möglich sind, die Toleranzen der einzelnen Bauteile derart aufeinander abzustimmen, daß eine Klemmung in der Befestigungslage des Beschlagteiles erfolgt. Um jedoch die Toleranzen in einem die Fertigung erleichternden Bereich zu halten, weist der Klemmzapfen vorteilhaft einen von einer elliptischen Buchse aus hartelastischem Werkstoff umgriffenen, unrunden Querschnitt zur drehfesten Aufnahme der elliptischen Buchse auf.

Die Erfindung ist in Ausführungsbeispielen auf der Zeichnung dargestellt und wird nachfolgend näher erläutert. Es zeigen:
- Fig. 1: einen zwischen Sitzteil und Rückenlehne eines Fahrzeug- sitzes angeordneten Gelenkbeschlag, dessen dem Sitzteil zugeordneter Beschlagteil eine der vorgenannten Befe- stigungsvorrichtungen aufweist,
- Fig. 2: einen dem Sitzteil zugeordneten, in Befestigungslage be- findlichen Beschlagteil, in dessen vordere Öffnung eine Kopfschraube eingesetzt ist, während die hintere Öff- nung als schlüssellochartige, einen trichterartigen Be- reich aufweisende Überschuböffnung zur Fixierung an einem Klemmzapfen gestaltet ist,
- Fig. 3: den aus Fig. 2 ersichtlichen Beschlagteil während der Aufsteckphase seiner Überschuböffnung auf den eine Kopfscheibe aufweisenden Klemmzapfen,
- Fig. 4: den aus den Fig. 2 und 3 ersichtlichen Beschlagteil in ei- ner Überschubphase kurz vor Erreichen seiner Spannlage am Klemmzapfen,
- Fig. 5: den aus den Fig. 2 - 4 ersichtlichen Beschlagteil nach Erreichen seiner Spannlage auf dem Klemmzapfen und dem Eindrehen der Schraube in die vordere Öffnung des Beschlagteiles,
- Fig. 6: ein weiteres Ausführungsbeispiel eines Beschlagteiles mit einer nach hinten offenen Überschuböffnung in einer etwa vertikalen Aufstecklage auf dem Klemmzapfen,
- Fig. 7: den aus Fig. 6 ersichtlichen Beschlagteil in einer um den Klemmzapfen in eine etwa horizontale Lage überführte Vorschwenkstellung bei Beginn des Eindrehens der Schraube in die vordere Öffnung des Beschlagteiles,
- Fig. 8: den aus den Fig. 6 und 7 ersichtlichen Beschlagteil in ei- ner Spannlage, die durch Festziehen der Schraube in der vorderen Öffnung gesichert ist,
- Fig. 9: ein weiteres Ausführungsbeispiel einer Befestigungsvor- richtung für einen Beschlagteil, dessen Überschuböff- nung für den Klemmzapfen winkelförmig gestaltet ist, und in etwa horizontaler Richtung und nach unten ver- läuft und an der Unterseite des Beschlagteiles aus diesem austritt, wobei der Beschlagteil in einer Phase des Auf- steckens auf den Klemmzapfen dargestellt ist,
- Fig.: 10 den aus Fig. 9 ersichtlichen Beschlagteil kurz vor Errei- chen der Spann-Endlage auf dem Klemmzapfen, wobei jedoch die vordere Öffnung bereits das Einführen der Schraube in einen Gewindeabschnitt am Sitzrahmen er- möglicht,
- Fig. 11: die Befestigungslage des aus den Fig. 9 und 10 ersichtli- chen Beschlagteiles, bei dem seine Spannlage durch die in den Sitzrahmen eingedrehte Schraube gesichert ist,
- Fig. 12: ein Ausführungsbeispiel der die vordere Öffnung des Be- schlagteiles am durch eine Führungsschiene gebildeten Sitzrahmen festlegende Schraube in einer aufgebroche- nen Schnittdarstellung nach der Linie XII-XII von Fig. 1 in einem gegenüber Fig. 1 vergrößerten Maßstab,
- Fig. 13: den in die Überschuböffnung eingeführten Klemmzapfen, dessen Stützschaft von einer hartelastischen Buchse um- griffen ist,
- Fig. 13A: den in der Überschuböffnung des Beschlagteiles ange- ordneten Klemmzapfen in einer Schnittansicht nach der Linie XIIIA-XIIIA von Fig. 13,
- Fig. 14: ein weiteres Ausführungsbeispiel einer den Stützschaft des Klemmzapfens umfassenden Buchse in einer der Fig. 13 analogen Darstellung,
- Fig. 14A: den von einer hartelastischen Buchse umgriffenen Stütz- schaft des in die Überschuböffnung eingeführten Klemm- zapfens in einer der Fig. 13A analogen Schnittansicht,
- Fig. 15: ein weiteres Ausführungsbeispiel einer den Stützschaft des Klemmzapfens umfassenden, hartelastischen Buchse, die einen gegenüber dem Stützschaft größeren Innen- durchmesser aufweist,
- Fig. 15A: das aus Fig. 15 ersichtliche Ausführungsbeispiel einer den Klemmzapfen umfassenden, hartelastischen Buchse in einer den Fig. 13A und 14A analogen Schnittansicht,
- Fig. 16: ein weiteres Ausführungsbeispiel einer den Stützschaft des Klemmzapfens umfassenden, hartelastischen Buchse, die durch randseitige Kegelansätze eine axiale Führung des an der Buchse mit der Überschuböffnung eingreifen- den Beschlagteiles übernimmt, wobei diese Darstellung in Fig. 16 analog zu den Darstellungen der Fig. 13, 14 und 15 ausgeführt ist,
- Fig. 16A: das aus Fig. 16 ersichtliche Ausführungsbeispiel in einer der Fig. 13A analogen Schnittdarstellung,
- Fig. 17: den elliptisch ausgebildeten Stützschaft des Klemmzap- fens in einer den Fig. 13A - 16A entsprechenden Schnittansicht bei in vertikaler Richtung aufgesetzter Überschuböffnung des Beschlagteiles,
- Fig. 17A: eine Zwischenlage des in einer Verschwenkungsphase befindlichen Beschlagteiles, bei dem die Seitenwangen der Überschuböffnung an einander gegenüberliegenden Seiten am Stützschaft des Klemmzapfens anliegen,
- Fig. 17B: die Endschwenklage des Beschlagteiles, wobei der ellip- tische Querschnitt vom Stützschaft des Klemmzapfens an den Höchstpunkten seines Umfanges an gegenüberlie- genden Wangen der Überschuböffnung verklemmt ist.

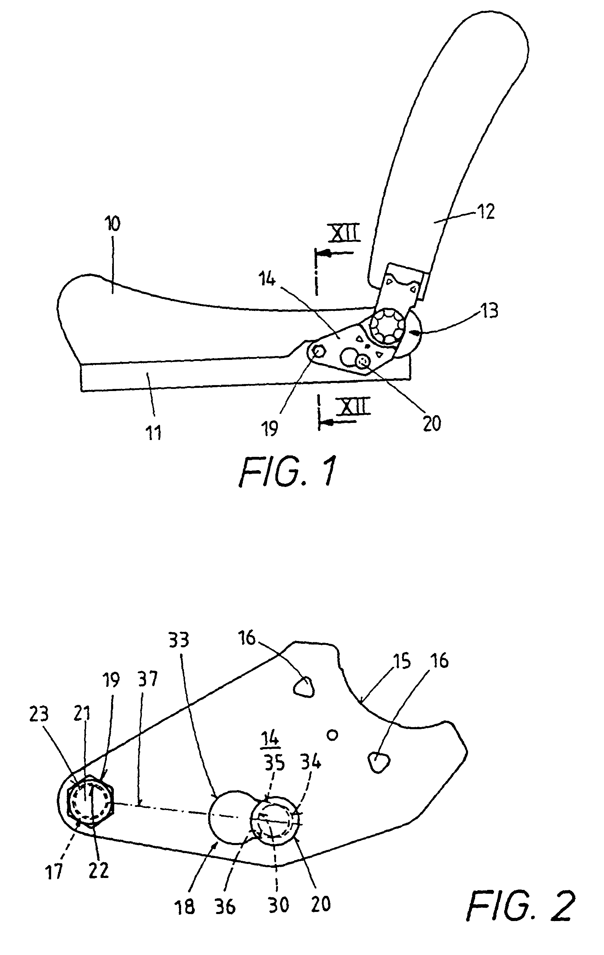

Obschon es sich bei dem in Fig. 1 dargestellten Beschlag um einen Gelenkbeschlag zur Einstellung der Rückenlehnenneigung handelt, ist es auch denkbar, einen starren Beschlag zwischen Sitzteil und Rückenlehne anzuordnen, dessen am Sitzteil oder am Sitzrahmen festgelegter Beschlagteil auf die gleiche, nachfolgend beschriebene Weise am Sitzteil oder Sitzrahmen festgelegt werden kann.

Der in Fig. 1 dargestellte Fahrzeugsitz umfaßt einen Sitzteil 10 mit einem zugehörigen Sitzrahmen 11 und eine Rückenlehne 12, die mit dem Sitzteil 10 über beispielsweise einen Gelenkbeschlag 13 in ihrer Neigungslage ein- und feststellbar ist. Während der schwenkbare Beschlagteil mit der Rückenlehne 12 fest verbunden ist, ist der starre Beschlagteil 14 über beispielsweise den Sitzrahmen 11 fest mit dem Sitzteil 10 verbunden.

Bei der Ausführungsform des aus Fig. 2 ersichtlichen Beschlagteiles 14 weist dieses in einem oberen, seitlich versetzten Bereich eine kreisabschnittförmige Aussparung 15 auf, zu der abstandsweise konzentrisch angeordnete Anschweißprägungen 16 in den Beschlagteil eingebracht sind, um diesen mit Laschen einer nicht näher dargestellten und ansich bekannten Ver- und Feststelleinrichtung zu verbinden. Im unteren Bereich weist der Beschlagteil 14 zwei im Abstand zueinander angeordnete Öffnungen 17 und 18 auf, welche den plattenförmigen Beschlagteil 14 durchdringen. Diese Öffnungen 17 und 18 dienen der Aufnahme von Befestigungsmitteln 19 und 20, die ihrerseits fest mit dem Sitzrahmen 11 des Sitzteiles 10 verbunden bzw. verbindbar sind.

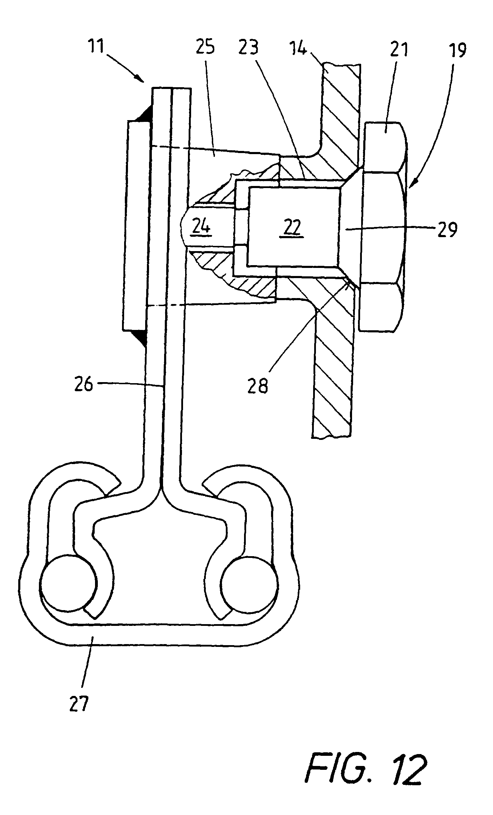

Bei dem Befestigungsmittel 19 handelt es sich - wie aus den Fig. 2 und 12 ersichtlich ist - um eine Kopfschraube 21, deren Bolzenabschnitt 22 im Durchmesser etwas kleiner ist als die als Öffnung 17 dienende Bohrung 23 im Beschlagteil 14. An den Bolzenabschnitt 22 der Kopfschraube 21 schließt ein Gewindeschaft 24 an, der in beispielsweise ein Befestigungsauge 25 einschraubbar ist, das seinerseits an beispielsweise einer zum Sitzrahmen 11 gehörenden Laufschiene 26 festgelegt ist. Im Falle der Verwendung einer Laufschiene 26 greift diese in eine Führungsschiene 27 in bekannter Weise ein, die ihrerseits am Fahrzeugboden festgelegt sein kann, so daß der Sitzteil 10 gegenüber dem Fahrzeugboden längsverschiebbar ist (Fig. 12). Der kreisförmige Bolzenabschnitt 22 weist an seinem Übergangsbereich zum Kopf der Kopfschraube 21 hin einen Spannansatz 28 auf, der bei dem in Fig. 12 dargestellten Ausführungsbeispiel als Kegelstumpf 29 ausgebildet ist. Mit diesem Spannansatz 28 ist eine zentrierte Fixierung des Beschlagteiles 14 am Sitzrahmen 11 möglich.

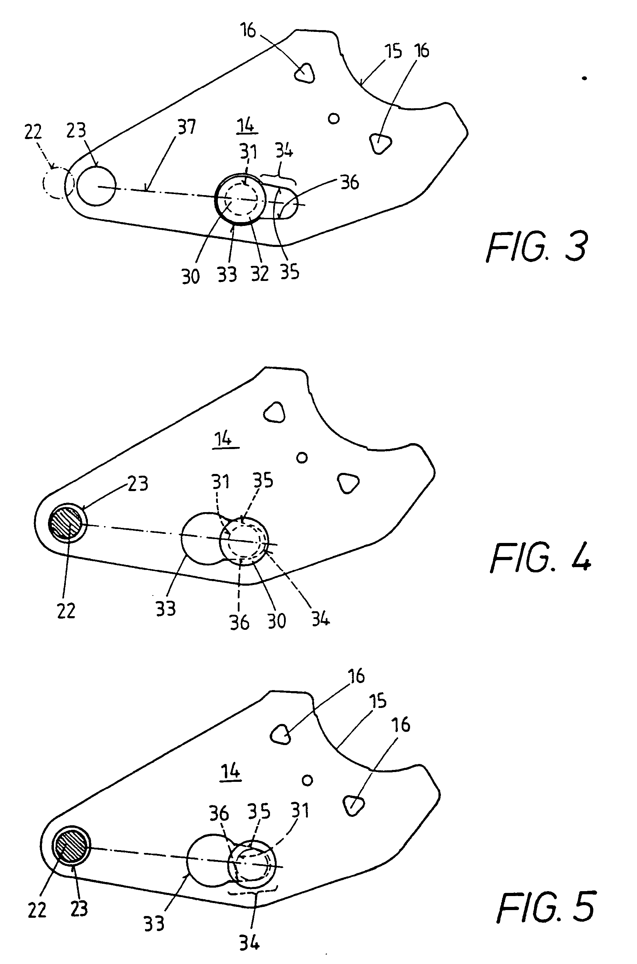

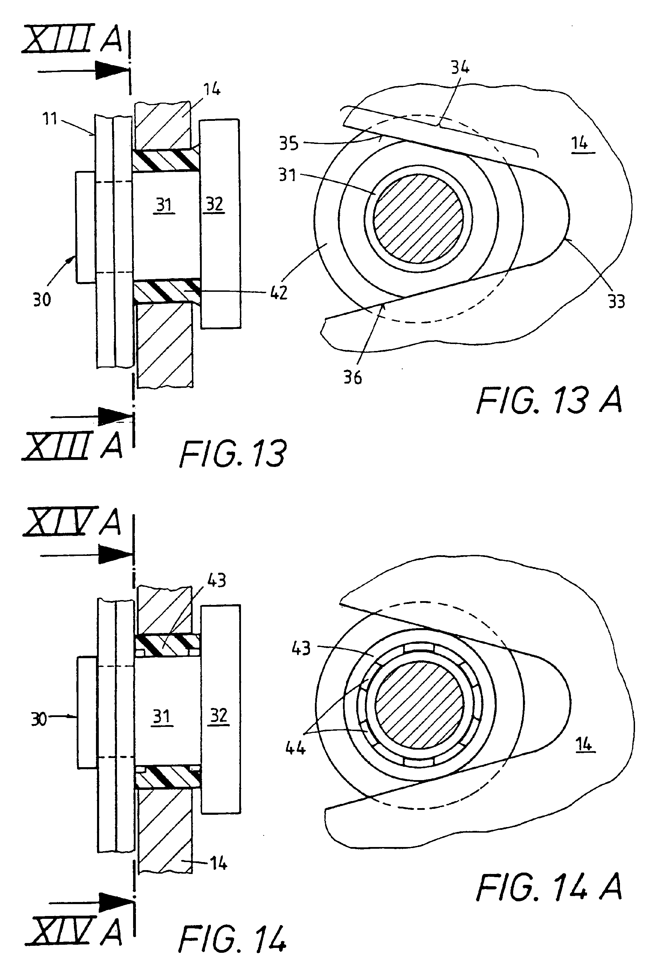

Das andere Befestigungsmittel 20 besteht aus einem am Sitzrahmen 11 bzw. an dessen zugehöriger Laufschiene 26 festgelegten Klemmzapfen 30, wie er in Ausführungsbeispielen aus den Fig. 13 - 17B ersichtlich ist. Dieser beispielsweise am Sitzrahmen 11 vernietete Klemmzapfen 30 besitzt einen Stützschaft, der bei den Ausführungsformen gemäß den Fig. 13 - 16A als Zylinderabschnitt 31 ausgebildet ist. An diesen Zylinderabschnitt 31 schließt sich eine Kopfscheibe 32 einstückig an, welche den Beschlagteil 14 bereichsweise übergreift und axial haltert. Der Zylinderabschnitt 31 des Klemmzapfens 30 durchgreift eine im Beschlagteil 14 befindliche Überschuböffnung 33, die bei dem aus den Fig. 2 - 5 ersichtlichen Ausführungsbeispiel schlüssellochartig ausgebildet ist. Diese Überschuböffnung 33 weist jeweils einen trichterartigen Bereich 34 auf, dessen gegenüberliegende Wangen 35 und 36 geneigt zur Längsachse 37 der Überschuböffnung 33 verlaufen. Die Verlängerung der Längsachse 37 der Überschuböffnung 33 verläuft auch durch das Zentrum der Bohrung 23. Dabei ist die Neigung der Wangen 35 und 36 gegenüber der Längsachse 37 und zueinander derart gewählt, daß beim Überschieben des Beschlagteiles 14 in Richtung auf seine aus den Fig. 2 und 5 entnehmbare Arretierungslage die Wangen 35 und 36 sich einander annähern und den Klemmzapfen 30 schließlich tangieren. Wie insbesondere der Fig. 3 entnommen werden kann, ist der sich an den trichterartigen Bereich 34 anschließende Bereich der Überschuböffnung 33 derart geformt, daß er sich über die Kopfscheibe 32 des Klemmzapfens 30 überschieben läßt. In dieser aus Fig. 3 ersichtlichen Lage liegt das Zentrum der Bohrung 23 des Beschlagteiles 14 entfernt vom Zentrum des Befestigungsauges 25, dessen Zentrum mit der Längsmitte der in das Gewindeloch des Befestigungsauges 25 eindrehbaren Kopfschraube 21 und somit auch mit dessen Bolzenabschnitt 22 übereinstimmt. Beim Überschieben des Beschlagteiles 14 über den Zylinderabschnitt 31 des Klemmzapfens 30 in Richtung auf das Zentrum des Befestigungsauges 25 wird schließlich die aus Fig. 4 ersichtliche Lage erreicht, bei der zwar die Wangen 35 und 36 des trichterartigen Bereichs 34 der Überschuböffnung 33 den Zylinderabschnitt 31 des Klemmzapfens 30 noch nicht ganz berühren und auch die Bohrung 23 eine etwas exzentrische Lage zum Zentrum des Befestigungsauges 25 einnimmt. Dabei ist es jedoch bereits möglich, durch die Bohrung 23 die Kopfschraube 21 mit ihrem Bolzenabschnitt 22 hindurchzustecken, so daß beim Einschrauben des Gewindeschaftes 24 der Kopfschraube 21 in das Innengewinde des Befestigungsauges 25 mit Hilfe des Spannansatzes 28 der Kopfschraube 21 die aus Fig. 5 ersichtliche Lage erzielt wird, bei welcher durch zentrische Anlage des Kegelstumpfs 29 in der Bohrung 23 des Beschlagteiles 14 dieser so weit über den Zylinderabschnitt 31 des Klemmzapfens 30 gezogen ist, daß die Wangen 35 und 36 des trichterartigen Bereichs 34 der Überschuböffnung 33 am Zylinderabschnitt 31 des Klemmzapfens 30 fest anliegen. Damit ist bei dem aus den Fig. 2 - 5 ersichtlichen Ausführungsbeispiel der Beschlagteil 14 fest mit dem Sitzrahmen 11 des Sitzteiles 10 verbunden.

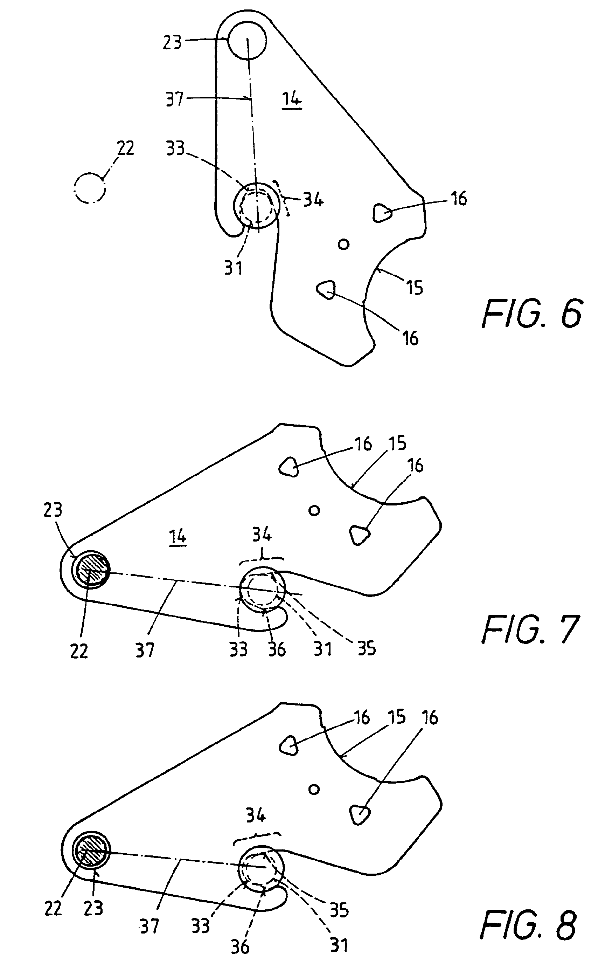

Aus den Fig. 6 - 8 ist eine modifzierte Ausführungsform ersichtlich, bei welcher die Kopfschraube 21 mit ihrem Bolzenabschnitt 22 sowie der Klemmzapfen 30 mit seinem Zylinderabschnitt 31 und auch die Bohrung 23 im Beschlagteil 14 in gleicher Weise gestaltet sind wie bei dem aus den Fig. 2 - 5 ersichtlichen Ausführungsbeispiel. Unterschiedlich ist bei dieser zweiten Version die Überschuböffnung 33, die zwar auch einen trichterartigen Bereich 34 aufweist, der sich jedoch zur Rückseite des Beschlagteiles hin von der Bohrung 23 wegweisend öffnet. Zur Festlegung des Beschlagteiles 14 dieser Version am Sitzteilrahmen 11 wird am Beginn der Montage dieser Beschlagteil 14 in der aus Fig. 6 ersichtlichen Lage auf den Zylinderabschnitt 31 des Klemmzapfens 30 aufgesteckt und danach in die aus Fig.7 ersichtliche Lage vorgeschwenkt. Dabei gelangt die Bohrung 23 in eine solche Lage, daß ihr Zentrum exzentrisch zur Mitte des Befestigungsauges 25 angeordnet ist, so daß ein nach vorn weisender, sichelförmiger Spalt zu Beginn des Einschraubens der Kopfschraube 21 zwischen dem Bolzenabschnitt 22 und der Bohrung 23 entsteht, dessen größtes Spiel sich auf der Längsachse 37 vor dem Bolzenabschnitt 22 befindet. In dieser Situation ist auch ein geringes Spiel zwischen dem Zylinderabschnitt 31 des. Klemmzapfens 30 und der Wange 36 des trichterartigen Bereiches 34 der Überschuböffnung 33 vorhanden. Gegen Ende des Einschraubvorganges der Kopfschraube 21 kommt deren Kegelstumpf 29 zur Anlage in der Bohrung 23, wodurch der Beschlagteil 14 nach hinten geschoben wird und der Zylinderabschnitt 31 des Klemmzapfens 30 gegen die Wangen 35 und 36 des trichterartigen Bereiches 34 der Überschuböffnung 33 in Anlage gedrückt wird. Diese Situation ist in Fig 8 dargestellt.

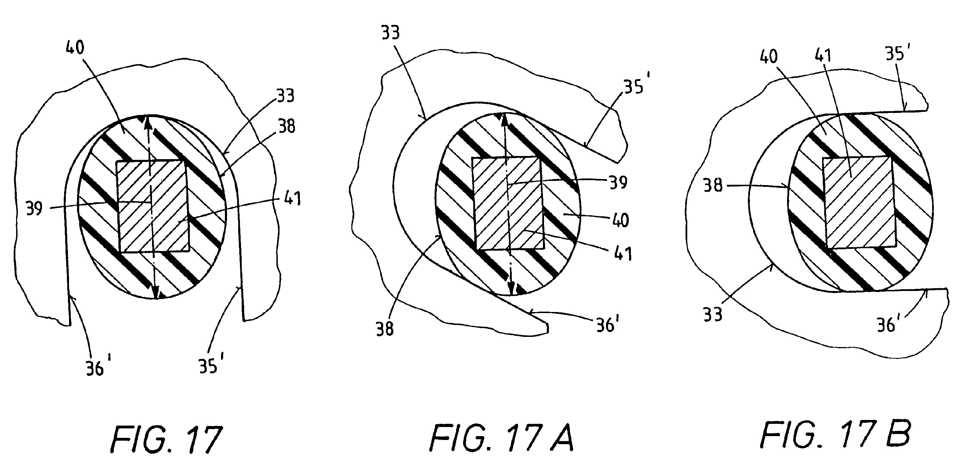

Diese vorgenannte, aus den Fig. 6 - 8 ersichtliche Version läßt sich noch weiter modifizieren, nämlich indem die Überschuböffnung 33 keinen trichterförmigen Bereich aufweist, sondern vielmehr parallel zueinander verlaufende Wangen 35' und 36' eines zur Rückseite hin offenen Langlochs. Der in dieser Überschuböffnung 33 eingreifende Klemmzapfen weist dann einen in diese Überschuböffnung 33 eingreifenden Klemmzapfenabschnitt 38 auf, dessen äußere Kontur einem elliptischen Querschnitt entspricht, dessen größte Achse 39 bei in Befestigungslage befindlichem Beschlagteil 14 quer zur Längsrichtung der Überschuböffnung 33 verläuft. Zur Sicherstellung der Befestigungslage trotz unvermeidlicher Toleranzen besteht dabei der Klemmzapfenabschnitt 38 aus einer elliptischen Buchse 40 aus beispielsweise einem hartelastischen Werkstoff, welche auf einem unrunden Querschnitt 41 des Klemmzapfens 30 plaziert ist. Dadurch läßt sich in jedem Fall eine Fig. 8 analoge Befestigungslage erzielen, weil die elliptische Buchse 40 im Klemmfall zur Anlage an den Wangen 35' und 36' verformt werden kann, wie aus Fig. 17B zu entnehmen ist.

Aus dem gleichen, vorgenannten Grund kann jedoch auch der Zylinderabschnitt 31 des Klemmzapfens 30 von einer hartelastischen, zylindrischen Buchse 42 umgriffen sein. Der Außendurchmesser dieser Buchse kann dabei einen etwas größeren Durchmesser aufweisen als die Distanz zwischen den Wangen 35 und 36 des trichterförmigen Bereiches 34 der Überschuböffnung 33 bei Erreichen der endgültigen Befestigungslage (Fig. 13A). Die Ausführung der Buchse 42 ist jedoch nicht auf die aus den Fig. 13 und 13A ersichtliche Form beschränkt, sondern kann vielmehr auch anders gestaltet sein, wie dies beispielsweise aus den Fig. 14 und 14A zu entnehmen ist. Bei dieser Buchse 43 sind an deren Innenumfang Verformungsvorsprünge 44 angeordnet, die beispielsweise als sich in Längsrichtung der Buchse 43 erstreckende Rippen ausgebildet sein können.

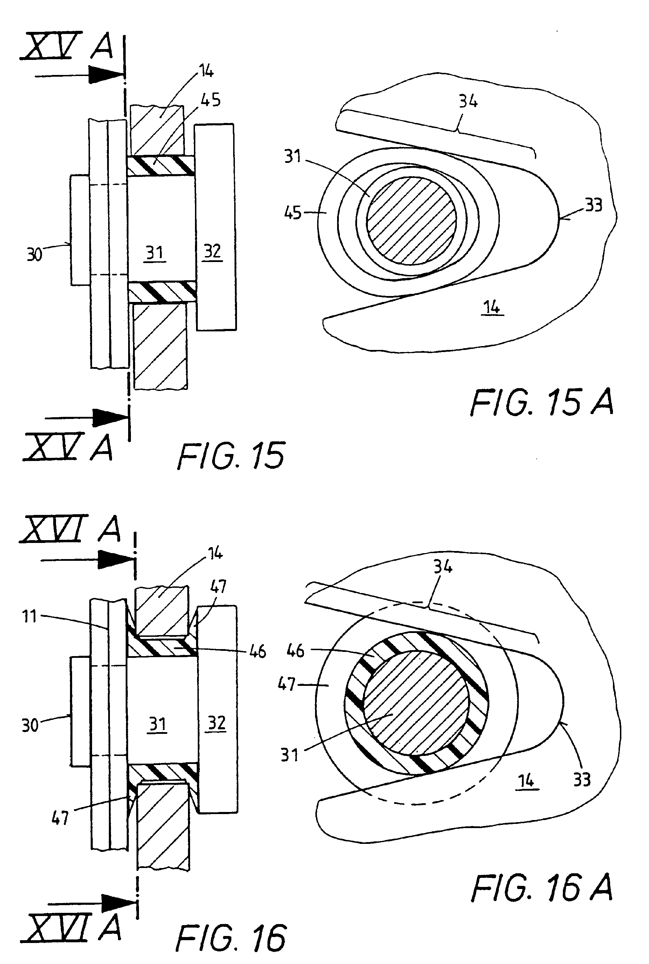

Desweiteren ist es denkbar, auf dem Zylinderabschnitt 31 eine zylindrische Buchse 45 aus hartelastischem Werkstoff anzuordnen, deren Innendurchmesser geringfügig größer ist als der Außendurchmesser des Zylinderabschnitts 31, so daß in Befestigungslage eine Verformung der Buchse 45 erfolgt, wie dies aus Fig. 15A zu entnehmen ist.

Ein weiteres Ausführungsbeispiel einer den Zylinderabschnitt 31 des Klemmzapfens 30 umfassenden Buchse 46 ist aus den Fig. 16 und 16A zu entnehmen. Diese im wesentlichen zylindrische, ringförmige Buchse 46 weist an ihrem Außenumfang im Bereich ihrer beiden Stirnseiten, ausgehend vom Außenumfangsbereich nach außen zu den Stirnseiten hin ansteigende Kegelringe 47 auf, die einstückiger Bestandteil der Buchse 46 sind. Auch diese Buchse 46 ist vorzugsweise aus einem hartelastischen Kunststoff gebildet. Allerdings lassen sich auch andere elastische Werkstoffe verwenden, und in machen Fällen läßt sich auch Federstahl für einige der zuvor beschriebenen Buchsen 40, 41, 42, 43, 45 und 46 einsetzen.

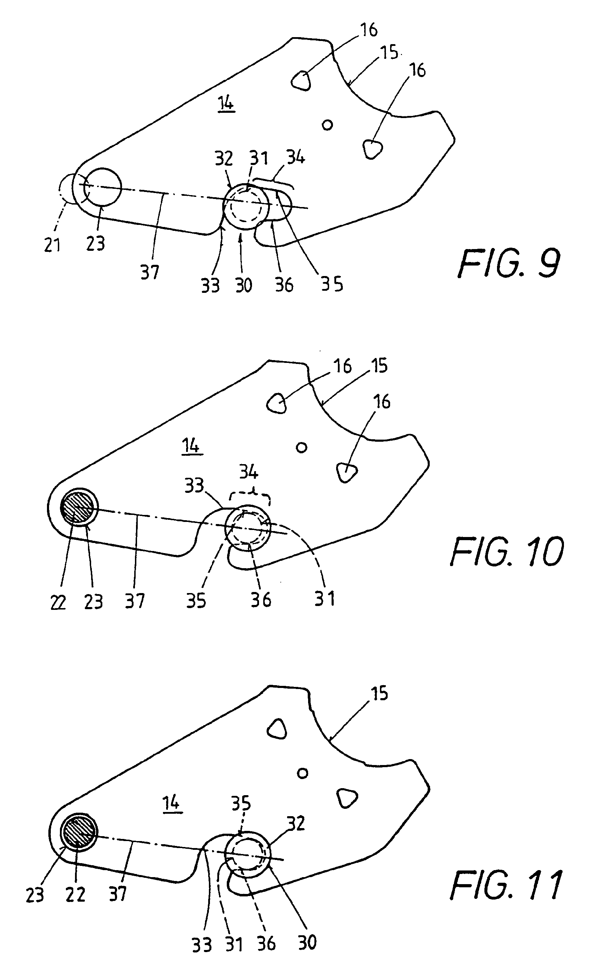

Eine dritte Version der Befestigungsvorrichtung für den Beschlagteil 14 ist aus den Fig. 9 - 11 zu entnehmen. Auch bei dieser Version ist im vorderen Bereich des Beschlagteiles 14 eine Bohrung 23 angeordnet, durch welche eine Kopfschraube 21 hindurchsteckbar ist, die ihrerseits mit ihrem Gewindeschaft 24 in eine Gewindebohrung des Befestigungsauges 25 des Sitzrahmens 11 eindrehbar ist, wobei ihr Bolzenabschnitt 22 mit Spiel in die Bohrung 23 eingreifen kann. Bei dieser Version weist die Kopfschraube 21 ebenfalls einen Spannansatz 28 in Form eines Kegelstumpfes 29 auf. Im rückwärtigen Bereich ist an der Unterseite des Beschlagteiles 14 ebenfalls eine Überschuböffnung 33 angeordnet, die jedoch winkelförmig gestaltet ist und zur Unterseite des Beschlagteiles 14 hin offen ist. Der sich in Längsrichtung der die Bohrung 23 und die Überschuböffnung 33 verbindenden Längsachse 37 erstreckende Bereich der Überschuböffnung ist ebenfalls als trichterartiger Bereich 34 ausgebildet und besitzt demzufolge einander gegenüberliegende, geneigte Wangen 35 und 36, die sich zu der von der Bohrung 23 wegweisenden Seiten hin verjüngen. Ausgehend von dem aus Fig. 9 ersichtlichen ersten Montageschritt läßt sich der Beschlagteil 14 hinter der Kopfscheibe des Klemmzapfens 30 auf dessen Zylinderabschnitt 31 aufstecken und in die aus Fig. 10 ersichtliche Lage vorschieben. Dabei ist sowohl zwischen den Wangen 35 und 36 der Überschuböffnung 33 und dem Zylinderabschnitt 31 als auch zwischen dem Bolzenabschnitt 22 der einzuschraubenden Kopfschraube 21 und der Bohrung 23 Spiel vorhanden, das erst gegen Ende des Einschraubvorganges der Kopfschraube 21 infolge deren Spannansatz 28 eliminiert wird, so daß die aus Fig. 11 ersichtliche Befestigungslage des Beschlagteiles 14 erreicht wird.

Wie bereits erwähnt, geben die dargestellten und vorbeschriebenen Ausführungsformen den Erfindungsgegenstand nur beispielsweise wieder, der keinesfalls allein darauf beschränkt ist. Es sind vielmehr noch mancherlei Änderungen und andere Ausgestaltungen des Erfindungsgegenstandes denkbar. Darüber hinaus sind alle in der Beschreibung genannten Merkmale erfindungswesentlich, auch wenn sie in den Ansprüchen nicht ausdrücklich genannt worden sind.

### Bezugszeichenliste:

- 10: Sitzteil
- 11: Sitzrahmen
- 12: Rückenlehne
- 13: Gelenkbeschlag
- 14: Beschlagteil
- 15: Aussparung
- 16: Anschweißprägung
- 17: Öffnung
- 18: Öffnung
- 19: Befestigungsmittel
- 20: Befestigungsmittel
- 21: Kopfschraube
- 22: Bolzenabschnitt, an 21
- 23: Bohrung, in 14
- 24: Gewindeschaft, von 21
- 25: Befestigungsauge, an 26
- 26: Laufschiene, von 11
- 27: Führungsschiene
- 28: Spannansatz, an 22
- 29: Kegelstumpf, von 22
- 30: Klemmzapfen
- 31: Zylinderabschnitt, von 30
- 32: Kopfscheibe, an 30
- 33: Überschuböffnung
- 34: trichterartiger Bereich
- 35: Wange, von 34
- 36: Wange, von 34
- 37: Längsachse
- 38: Klemmzapfenabschnitt
- 39: Achse, größte des ellipt. Abschnitts
- 40: Buchse, elliptisch
- 41: Querschnitt, unrund, von 30
- 42: Buchse, zylindrisch
- 43: Buchse, zylindrisch
- 44: Verformungsvorsprung
- 45: Buchse, zylindrisch
- 46: Buchse, zylindrisch
- 47: Kegelring

## Patentansprüche

1. Befestigungsvorrichtung für den am Sitzteil (10) oder Sitzrahmen (11) festgelegten Beschlagteil (14) eines zwischen Sitzteil (10) und Rückenlehne (12) angeordneten Beschlages, wobei die Befestigungsvorrichtung zumindest zwei Öffnungen (17,18) des Beschlagteiles (14) durchdringende und im Abstand zueinander mit dem Sitzteil (10) oder Sitzrahmen (H) verbundene Befestigungsmittel (19,20) umfaßt,
**dadurch gekennzeichnet,**
**daß** das eine Befestigungsmittel (19) von einem Haltebolzen (21) mit einem Spannansatz (28) gebildet ist, während das andere Befestigungsmittel (20) von einem in eine Überschuböffnung (33) im Beschlagteil (14) eingreifenden Zapfen (30) gebildet ist, daß das Beschlagteil (14) plattenförmig gestaltet ist und daß der Haltebolzen als Kopfschraube (21) mit einem in eine Gewindebohrung des Sitzteiles oder Sitzrahmens eindrehbaren Gewindeschaft (24) und einem Bolzenabschnitt (22) mit kreisförmigem Querschnitt ausgebildet ist, wobei der Bolzenabschnitt (22) wenigstens bereichsweise als Kegelstumpf (29) gestaltet ist.

2. Befestigungsvorrichtung nach Anspruch 1, **dadurch gekennzeichnet, daß** die Überschuböffnung (33) im Beschlagteil (14) einen trichterartigen Bereich (34) aufweist, an dessen gegenüberliegenden Wangen (35, 36) der Klemmzapfen (30) zur Anlage kommt.

3. Befestigungsvorrichtung nach Anspruch 2, **dadurch gekennzeichnet, daß** ein in die Überschuböffnung (33) im Beschlagteil (14) eingreifender Zylinderabschnitt (31) eines als Klemmzapfen (30) ausgebildeten Zapfens von einer hartelastischen Buchse (42) umgriffen ist.

4. Befestigungsvorrichtung nach Anspruch 3, **dadurch gekennzeichnet, daß** die Buchse (43) an ihrem Innenumfang mehrere Verformungsvorsprünge (44) aufweist.

5. Befestigungsvorrichtung nach Anspruch 3, **dadurch gekennzeichnet, daß** die Buchse (46) im jeweiligen Endbereich ihres Außenumfanges nach außen und zu den Stirnseiten der Buchse (46) ansteigende Kegelringe (47) aufweist.

6. Befestigungsvorrichtung nach Anspruch 1, **dadurch gekennzeichnet, daß** die Überschuböffnung (33) des Beschlagteiles (14) sich in Richtung auf die die Schraube (21) aufnehmende Bohrung (23) im Beschlagteil (14) verjüngt und von der Bohrung (23) wegweisend aus dem Beschlagteil (14) austritt.

7. Befestigungsvorrichtung nach Anspruch 1, **dadurch gekennzeichnet, daß** der Klemmzapfen (30) einen Klemmzapfenabschnitt (38) mit elliptischem Querschnitt aufweist, dessen größte Achse (39) bei in Befestigungslage befindlichem Beschlagteil (14) quer zur Längsrichtung der Überschuböffnung (33) verläuft.

8. Befestigungsvorrichtung nach Anspruch 7, **dadurch gekennzeichnet, daß** der Klemmzapfenabschnitt (38) einen von einer elliptischen Buchse (40) aus hartelastischem Werkstoff umgriffenen, unrunden Querschnitt (41) zur drehfesten Aufnahme der elliptischen Buchse (40) aufweist.

## Claims

1. Fastening device for the fitting part (14) of a fitting arranged between the seat part (10) and backrest (12), said fitting part (14) being secured on the seat part (10) or seat frame (11), wherein the fastening device comprises fastening means (19, 20) passing through at least two openings (17, 18) in the fitting part (14) and connected, at a spacing from one another, to the seat part (10) or seat frame (11),
**characterised in that** one of the fastening means (19) is formed by a securing bolt (21) having a clamping projection (28), while the other fastening means (20) is formed by a pin (30) engaging in an insertion opening (33) in the fitting part (14), **in that** the fitting part (14) is plate-shaped and **in that** the securing bolt is configured as a head screw (21) having a threaded shaft (24) adapted to be screwed into a threaded bore of the seat part or seat frame and having a bolt section (22) of circular cross-section, wherein at least part of the bolt section (22) is formed as a truncated cone (29).

2. Fastening device according to claim 1, **characterised in that** the insertion opening (33) in the fitting part (14) has a funnel-like region (34) on the opposing flanks (35, 36) of which the clamping pin (30) comes to abut.

3. Fastening device according to claim 2, **characterised in that** a cylinder section (31) of a pin in the form of a clamping pin (30), engaging in the insertion opening (33) in the fitting part (14), is surrounded by a hard elastic bushing (42).

4. Fastening device according to claim 3, **characterised in that** the bushing (43) has a plurality of deformation projections (44) around its inner circumference.

5. Fastening device according to claim 3, **characterised in that** the bushing (46) comprises conical rings (47) in the end region of its outer periphery which ascend outwardly and towards the end faces of the bushing (46).

6. Fastening device according to claim 1, **characterised in that** the insertion opening (33) of the fitting part (14) tapers towards the bore (23) in the fitting part (14) that accommodates the screw (21), and emerges from the fitting part (14) in a direction away from the bore (23).

7. Fastening device according to claim 1, **characterised in that** the clamping pin (30) has a clamping pin portion (38) of elliptical cross-section, the greatest axis (39) of which extends transversely to the longitudinal direction of the insertion opening (33) when the fitting part (14) is in the fastening position.

8. Fastening device according to claim 7, **characterised in that** the clamping pin portion (38) has a non-round cross-section (41) surrounded by an elliptical bushing (40) of hard-elastic material, for receiving the elliptical bushing (40) in a manner to prevent rotation.

## Revendications

1. Dispositif de fixation pour la partie de ferrure (14), fixée sur la partie d'assise (10) ou sur le cadre de siège (11), d'une ferrure disposée entre la partie d'assise (10) et le dossier (12), le dispositif de fixation comprenant au moins deux moyens de fixation (19, 20), traversant des ouvertures (17, 18) de la partie de ferrure (14) et reliés, à distance l'un de l'autre, à la partie d'assise (10) ou au cadre de siège (11),
**caractérisé en ce que**
le premier moyen de fixation (19) est formé par un boulon de maintien (21) muni d'un appendice de serrage (28), tandis que l'autre moyen de fixation (20) est formé par un tourillon (30) s'engageant dans une ouverture à poussée supérieure (33) ménagée dans la partie de ferrure (14), **en ce que** la partie de ferrure (14) est conformée en plaque, et **en ce que** le boulon de maintien est réalisé sous forme de vis à tête (21) avec une tige filetée (24) susceptible d'être vissée dans un trou taraudé de la partie d'assise ou du cadre de siège et avec un tronçon de boulon (22) ayant une section transversale en forme de cercle, le tronçon de boulon (22) étant conformé, au moins par zones, en tronc de cône (29).

2. Dispositif de fixation selon la revendication 1, **caractérisé en ce que** l'ouverture à poussée supérieure (33) réalisée dans la partie de ferrure (14) présente une portée (34) du genre d'un entonnoir, sur les joues (35, 36) opposées de laquelle le tourillon de serrage (30) vient en appui.

3. Dispositif de fixation selon la revendication 2, **caractérisé en ce qu'**un tronçon de cylindre (31), s'engageant dans l'ouverture à poussée supérieure (33) réalisée dans la partie de ferrure (14), d'un tourillon réalisé sous forme de tourillon de serrage (30) est entouré par une douille (42) élastique dure.

4. Dispositif de fixation selon la revendication 3, **caractérisé en ce que**, sur sa périphérie extérieure, la douille (43) présente plusieurs saillies de déformation (44).

5. Dispositif de fixation selon la revendication 3, **caractérisé en ce que**, dans la zone d'extrémité respective de sa périphérie extérieure, la douille (46) présente des anneaux coniques (47) montant vers l'extérieur et vers les faces frontales de la douille (46).

6. Dispositif de fixation selon la revendication 1, **caractérisé en ce que** l'ouverture à poussée supérieure (33) de la partie de ferrure (14) va en s'effilant dans la direction du perçage (23) recevant la vis (21) et ménagé dans la partie de ferrure (14), et sort de la partie de ferrure (14), en s'écartant du perçage (23).

7. Dispositif de fixation selon la revendication 1, **caractérisé en ce que** le tourillon de serrage (30) présente un tronçon de tourillon de serrage (38) à section transversale elliptique, dont le grand axe (39) s'étend transversalement à la direction longitudinale de l'ouverture à poussée supérieure (33), lorsque la partie de ferrure (14) se trouve en position de fixation.

8. Dispositif de fixation selon la revendication 7, **caractérisé en ce que** le tronçon de tourillon de serrage (38) présente une section transversale (41) non ronde, entourée par une douille (40) elliptique en matériau élastique dur, de manière à supporter de façon assujettie en rotation la douille (40) elliptique.
